# FASCICULE DE BREVET EUROPEEN

(11) **EP 3 429 944 B1**
(45) Date de publication et mention de la délivrance du brevet: **07.06.2023**
(21) Numéro de dépôt: 17710539.2
(22) Date de dépôt: 14.03.2017
(51) Int. Cl.: B65G 13/11, B64F 1/36

(54) **INSTALLATION DE CONTRÔLE DE SÛRETÉ DE PASSAGERS FLEXIBLE**
FLEXIBLE PASSAGIERSICHERHEITSKONTROLLANLAGE
FLEXIBLE PASSENGER SECURITY CONTROL INSTALLATION

(30) Priorité: 14.03.2016 FR 1652141
(43) Date de publication de la demande: 23.01.2019
(73) Titulaire: Selfcair UK Ltd, Harrogate, Yorkshire HG1 1DY (GB)
(72) Inventeur: SAFIR, André, 92500 Rueil-Malmaison (FR)
(74) Mandataire: Gauchet, Fabien Roland
(86) Numéro de dépôt international: PCT/EP2017/055894
(87) Numéro de publication internationale: WO 2017/157878

(56) Documents cités:
- EP-A1- 0 336 362
- EP-A1- 2 868 603
- WO-A1-2012/156552
- DE-A1-102013 216 823
- US-A1- 2005 193 648
- US-A1- 2006 151 302

## Description

La présente invention se rapporte à une installation de contrôle de sûreté de passagers destinée à être installée entre une aire de réception et une aire de sûreté.

Un domaine d'application envisagé est notamment, mais non exclusivement, celui du contrôle de sûreté dans les aérogares.

Des installations de contrôle de sûreté connues, mises en oeuvre entre une aire de réception et une aire de sûreté ou d'embarquement, comporte une bande transporteuse longitudinale et un appareil radioscopique qu'elle traverse. La bande transporteuse présente une extrémité amont s'étendant dans l'aire de réception et une extrémité avale s'étendant dans l'aire de sûreté. Aussi, l'installation comporte un jeu de bacs de transfert, les bacs étant mis à la disposition des passagers dans l'air de réception. De la sorte, successivement, les passagers saisissent les bacs de réception et les déposent sur l'extrémité amont de la bande transporteuse pour les remplir de leurs effets personnels, soit leurs bagages destinés à la cabine de l'avion et autres accessoires qu'ils portent. Généralement, chaque passager met en oeuvre au moins deux bacs. Grâce au mouvement de la bande transporteuse, les bacs remplis traversent l'appareil radioscopique et leur contenu est contrôlé grâce aux rayons X, pour échoir finalement dans l'extrémité aval, où les passagers récupèrent leurs effets personnels après avoir franchi un portique de contrôle.

Ce type d'installation est réalisé sur mesure en fonction de la configuration de l'aérogare. Aussi, il est nécessaire de fabriquer les différents éléments de l'installation puis de les transférer in situ pour pouvoir les assembler. Pour chaque nouvelle installation de contrôle, les différents éléments sont dimensionnés en conséquence.

Un tel mode de mise en oeuvre requiert des délais relativement longs entre la conception et l'installation et partant, représente des coûts relativement importants. On pourra notamment se référer aux documents US2005/193648, EP0336362 et US2006/151302, lesquels décrivent des installations monobloc présentant des chemins d'acheminement entre une extrémité de réception et une extrémité de sûreté d'un seul tenant.

Aussi, un problème qui se pose et que vise à résoudre la présente invention est de fournir une installation de contrôle de sûreté de passagers qui puisse être installée dans des temps plus courts et à des coûts plus avantageux.

Dans ce but, Installation de contrôle de sûreté de passagers destinée à être installée entre une aire de réception et une aire de sûreté d'une aérogare, les passagers étant munis d'effets personnels à contrôler, ladite installation comprenant un jeu de bacs de transfert et un chemin d'acheminement et de contrôle des bacs, ledit chemin d'acheminement et de contrôle présentant une extrémité de réception située dans ladite aire de réception pour permettre à chacun desdits passagers de charger au moins un bac de transfert contenant ses effets personnels à contrôler, et une extrémité de sûreté située dans ladite aire de sûreté pour permettre à chacun desdits passagers de récupérer ses effets personnels contrôlés et de libérer lesdits au moins un bac de transfert, ladite installation comprenant en outre, un chemin d'acheminement retour s'étendant sous ledit chemin d'acheminement et de contrôle des bacs pour pouvoir acheminer les bacs de transfert libérés, de ladite extrémité de sûreté vers ladite extrémité de réception. L'installation comprend une pluralité de modules juxtaposés mécaniquement indépendants, et chacun desdits modules comporte, d'une part un berceau en U définissant un plan moyen de berceau, et d'autre part un train de rouleaux motorisés supérieur installé au-dessus d'un train de rouleaux motorisés inférieur à l'intérieur dudit berceau en U selon une direction sensiblement perpendiculaire audit plan moyen de berceau.

Ainsi, une caractéristique de l'invention réside dans la réalisation de modules identiques, puis dans la mise en oeuvre de ces modules mécaniquement indépendants les uns à la suite des autres. Aussi, les modules sont juxtaposés de manière à ce que les trains de rouleaux motorisés supérieurs et les trains de rouleaux inférieurs de la pluralité de modules forment respectivement, ledit chemin d'acheminement et de contrôle des bacs, et ledit chemin d'acheminement retour.

Par conséquent, on réalise un type de module standard que l'on peut alors stocker et on met en oeuvre le nombre de modules standards adaptés aux dimensions de l'installation requise. Aussi, on obtient de la sorte des gains importants de productivité sur la fabrication des modules. De surcroît, le stockage permet de pouvoir répondre plus rapidement et de réduire les délais d'installation.

Selon une caractéristique de mise en oeuvre de l'invention particulièrement avantageuse, lesdits modules de ladite pluralité de modules présentent des dimensions identiques. Ils sont ainsi aisés à produire à un coût avantageux, et le stockage est également facilité.

Préférentiellement, les trains de rouleaux motorisés présentent chacun un rouleau moteur et des rouleaux menés couplés en rotation audit rouleau moteur. Ainsi, les rouleaux motorisés s'étendent parallèlement les uns par rapport aux autres dans un même plan, et l'un d'entre eux est un rouleau moteur, par exemple de type tubulaire. Il est alors couplé aux autres rouleaux par exemple au moyen d'une courroie de transmission.

On observera que les rouleaux motorisés s'étendent selon des directions parallèles au plan moyen du berceau.

Au surplus, les trains de rouleaux motorisés présentent, avantageusement, chacun une paire d'organes support parallèles, et lesdits rouleaux motorisés sont montés transversalement entre les organes support de ladite paire d'organes support. Aussi, les organes supports parallèles s'étendent perpendiculairement au plan moyen du berceau et ils sont équipés de paliers en regard, et les rouleaux motorisés présentant chacun deux extrémités opposées. Les deux extrémités opposées sont alors respectivement installées dans deux paliers en regard.

Avantageusement, ledit berceau en U présente deux branches opposées et une embase pour maintenir lesdites branches sensiblement verticalement. De la sorte, le berceau en U, formant l'ossature du module, s'étend verticalement sur une paroi horizontale, et en particulier la paroi de sol. On observera que le plan moyen du berceau en U est orienté sensiblement perpendiculairement à la direction d'entraînement longitudinale des bacs de transfert, de l'extrémité de réception vers l'extrémité de sûreté.

En outre, ledit train de rouleaux motorisés supérieur présente des rouleaux motorisés espacés les uns des autres, et ledit train de rouleaux motorisés supérieur de l'un desdits modules comprend des organes d'entraînement transversal montés entre lesdits rouleaux motorisés. De la sorte, à partir d'un module standard identique aux autres modules, on y ajoute des organes d'entraînement transversal permettant d'entraîner les bacs de transfert en translation selon une direction perpendiculaire à la direction d'entraînement longitudinale des bacs de transfert. Une telle possibilité de déviation des bacs de transfert permet d'isoler par exemple, des bacs de transfert contenant des effets personnels suspects.

Préférentiellement, lesdits organes d'entraînement transversal comprennent chacun un cadre monté mobile en translation entre une position rétractée et une position en saillie desdits rouleaux motorisés, et une courroie de transfert montée mobile en rotation autour dudit cadre. Aussi, les organes d'entraînement comportent un actionneur vertical pour porter le cadre en saillie des rouleaux motorisés, et un actionneur rotatif pour pouvoir entraîner la courroie en rotation.

Selon un autre mode de mise en oeuvre de l'invention, l'installation comprend en outre un module terminal, comprenant d'une part un berceau en U, et d'autre part un espace de stockage supérieur pour recevoir lesdits bacs de transfert libérés, situé au-dessus d'un train de rouleaux motorisés inférieur à l'intérieur dudit berceau en U, et ledit module terminal comprend des roues dentées pour pouvoir entraîner un à un lesdits bacs de transfert libérés sur ledit train de rouleaux motorisés inférieur. Ainsi, le module terminal est situé à l'extrémité de ladite extrémité de sûreté dans le prolongement de ladite pluralité de modules juxtaposés. De la sorte, à partir de l'ossature du module, on réalise un module terminal permettant de porter les bacs libérés du niveau du train de rouleaux motorisés supérieur vers le chemin d'acheminement retour. Les bacs de transfert libérés sont en effet empilés les uns dans les autres sur les roues dentée. Et la rotation pas à pas des roues dentées permet de déposer un à un les bacs de transfert libérés sur le train de rouleaux motorisés inférieur, lequel est contigu au train de rouleaux motorisés inférieur du dernier module précédent le module terminal.

On observera que les rouleaux du train de rouleaux motorisés supérieur de tous les modules, formant le chemin d'acheminement et de contrôle, sont entraînés dans un même sens de rotation permettant d'entraîner les bacs de transfert appuyés sur ces rouleaux, de l'extrémité de réception vers l'extrémité de sûreté. En revanche les rouleaux du train de rouleaux motorisés inférieurs de tous les modules, formant le chemin d'acheminement retour, sont entraînés dans un sens de rotation opposé pour pouvoir entraîner les bacs de transfert appuyés sur ces rouleaux de l'extrémité de sûreté vers l'extrémité de réception.

En outre, de façon particulièrement avantageuse, lesdits modules sont reliés ensemble par un bus informatique. De la sorte, la commande simultanée de tous les modules est simplifiée. De surcroît, on évite ainsi le temps de câblage des installations conventionnelles.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle en perspective d'un module conforme à l'invention ;
- la Figure 2 est une vue schématique partielle de face d'un élément de l'invention représenté sur la figure 1 selon la flèche II ;
- la Figure 3 est une vue schématique partielle en perspective d'un module conforme à l'invention équipé d'un élément additionnel ;
- la Figure 4A est une vue schématique partielle de côté d'un module complémentaire conforme à l'invention ;
- la Figure 4B est une vue schématique partielle de dessus du module complémentaire représenté sur la figure 4A ; et,
- la Figure 5 est une vue schématique partielle de côté d'une installation de contrôle conforme à l'invention.

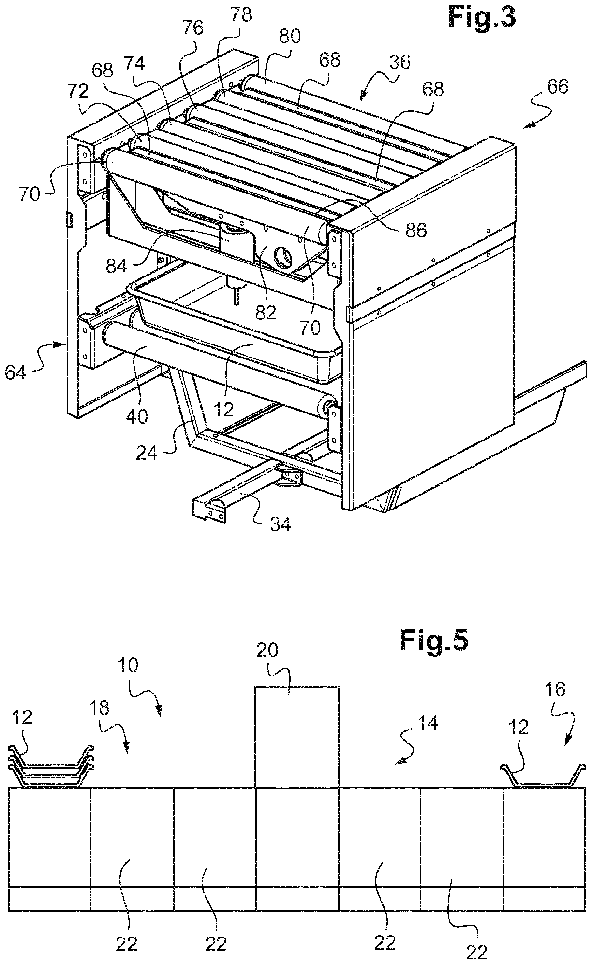

On se référera en premier lieu à la figure 5 illustrant une installation de contrôle de sûreté de passagers 10 conforme à l'invention. L'installation de contrôle 10 présente un jeu de bacs de transfert 12 et un chemin d'acheminement et de contrôle 14 des bacs de transfert 12. Le chemin d'acheminement et de contrôle 14 présente une extrémité de réception 16 et une extrémité de sûreté 18 opposée. Un dispositif de contrôle aux rayons X 20 est installé entre les deux extrémités 16, 18. Les passagers remplissent ainsi les bacs de transfert 12 de leurs effets personnels à l'extrémité de réception 16. Les bacs de transfert sont acheminés sur le chemin d'acheminement et de contrôle 14 pour traverser le dispositif de contrôle aux rayons X puis être guidés jusqu'à l'extrémité de sûreté 18. Les passagers récupèrent alors leurs effets personnels et viennent stocker les bacs de transfert 12 libérés à l'extrémité de sûreté 18 comme on l'expliquera ci-après.

Aussi, l'installation de contrôle 10 présente des modules juxtaposés 22 identiques en termes de dimensions, d'ossature et de construction.

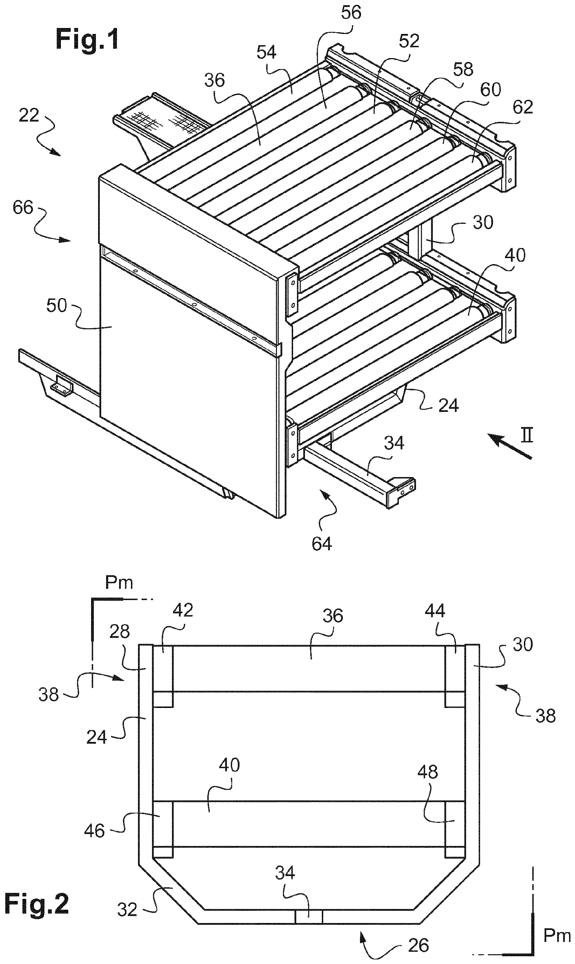

On décrira ainsi en référence aux figures 1 et 2, un module 22 de base. Ainsi sur la figure 2 on a représenté un berceau en U 24 s'étendant selon un plan moyen Pm parallèle au plan de la figure et présentant une embase 26 et deux branches parallèles 28, 30 opposées l'une de l'autre. L'embase 26 comporte une partie en V 32 reliant entre elles les deux branches, 28, 30 et un profilé longitudinal 34 s'étendant perpendiculairement à la partie en V 32 de manière à pouvoir maintenir les deux branches 28, 30 verticalement par rapport à une paroi de sol.

En outre, un train de rouleaux motorisés supérieur 36 est installé entre les deux branches 28, 30 au niveau de leur extrémité libre 38. Le train de rouleaux motorisés supérieur 36 comprend deux organes support parallèles supérieurs 42, 44 respectivement solidaires des deux branches 28, 30.

Un train de rouleaux motorisés inférieurs 40 est installé en dessous du train de rouleaux motorisés supérieur 36 parallèlement. Le train de rouleaux motorisés inférieurs 40 comprend deux organes support parallèles inférieurs 46, 48 respectivement solidaires des deux branches 28, 30.

On retrouve ainsi sur la figure 1, le train de rouleaux motorisés supérieur 36 situé au-dessus du train de rouleaux motorisés inférieur 40. On retrouve l'une 30 des deux branches 28, 30 du berceau 24. La seconde branche 28 est elle masquée par une paroi d'habillage 50.

On observera que le train de rouleaux motorisés supérieur 36 est analogue ici au train de rouleaux motorisés inférieur 40. Aussi, le train de rouleaux motorisés supérieur 36 présente six rouleaux parallèles espacées les uns des autres, un rouleau moteur 52 et cinq rouleaux motorisés 54, 56, 58, 60, 62. Le rouleau moteur 52 est couplé en rotation aux autres rouleaux 54, 56, 58, 60, 62 au moyen d'une courroie de transmission non représentée. Le rouleau moteur 52 est entraîné lui-même par un moteur tubulaire logé à l'intérieur et il entraîne ainsi les autres rouleaux dans un sens de rotation prédéfini.

De la même façon, le train de rouleaux motorisées inférieure 40 présente six rouleaux parallèles espacés les uns des autres avec un rouleau moteur pour pouvoir entraîner les cinq autres rouleaux motorisés. En revanche, le rouleau moteur du train de rouleaux motorisés inférieur 40 entraîne les rouleaux dans un sens de rotation opposé au sens de rotation prédéfini des rouleaux motorisés du train supérieur 36.

Par ailleurs, on observera que le module 22 présente une interface amont 64 opposée à une interface aval 66 et qu'un bus informatique de communication s'étend entre l'interface amont 64 et l'interface aval 66 et que le bus de communication est connecté aux éléments de commande des rouleaux moteurs. Par ailleurs, une alimentation électrique parallèle est prévue.

On se référera à présent à la figure 3 présentant un module tel que représenté sur la figure 1, incluant au surplus des organes d'entraînement transversal 68. On retrouve sur cette figure, le berceau en U 24 et les deux trains de rouleaux motorisés supérieur 36 et inférieur 40. On observera que le train de rouleaux motorisés supérieur 36 présente six rouleaux motorisés, de l'interface amont 64 vers l'interface aval 66, une première paire de rouleaux 70, 72 espacés l'un de l'autre, une deuxième paire de rouleaux 74, 76, espacés l'un de l'autre, et une troisième paire de rouleaux 78, 80 également espacés l'un de l'autre. Chacune des paires présente entre ses rouleaux, des organes d'entraînement transversal 68.

Chaque organe d'entraînement transversal 68 comprend un cadre mobile verticalement 82 et un actionneur vertical 84. Et chaque cadre mobile est équipé d'une courroie 86 montée à rotation autour du cadre. Elle est mue en rotation par un organe moteur non représenté. Ainsi, l'actionneur vertical 84 est destiné à entraîner en translation le cadre mobile en saillie du plan des rouleaux tandis que l'organe moteur provoque la rotation de la courroie 86 pour transférer le bac de transfert selon une direction perpendiculaire. Les trois organes d'entraînement transversal 68 sont couplés les uns avec les autres afin de pouvoir être commandés simultanément.

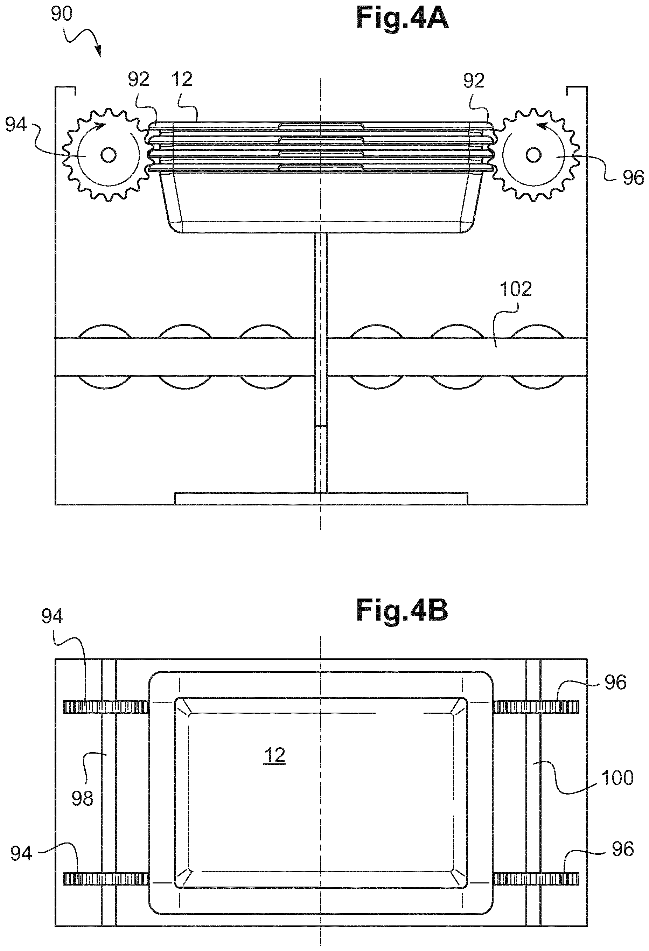

On se référera à présent sur les figures 4A et 4B, illustrant un module terminal 90. Ce dernier comprend une ossature analogue à celle du module 22 illustré sur la figure 2, excepté la partie supérieure, dans laquelle le train de rouleaux motorisés supérieur 36 est remplacé par un espace de stockage supérieur des bacs de transfert libéré 12. Les bacs de transfert 12 présentent une forme générale conique et un rebord 92. Ainsi, ils peuvent être empilés les uns dans les autres tandis que les rebords 92 des bacs empilés définissent une enveloppe cylindrique.

Ainsi, de part et d'autre de l'espace de stockage supérieur, deux paires de roue dentée 94, 96 sont installées respectivement sur deux arbres parallèles 98, 100. Aussi, dans leur périphérie la plus proche l'une de l'autre, les roues dentées en regard 94, 96 présentent deux creux de dents aptes à recevoir les deux rebords opposés d'un bac de transfert 12. Aussi, le bac de transfert 12 est prisonnier des deux dents et tous les bacs de transfert 12 engagés au-dessus sont stockés et demeurent en position fixe.

Les roues dentées en regard 94, 96 sont alors entraînées en rotation l'une vers l'autre pas à pas. Partant, les bacs de transfert 12 empilés sont libérés un à un et ils échoient sur un train de rouleaux motorisés inférieurs 102. De la sorte, le bac de transfert 12 en appui sur ce train de rouleaux motorisés inférieur 102 va pouvoir être transféré au module contigu 22 du type illustré sur la figure 1, afin de pouvoir retourner vers l'extrémité de réception grâce au chemin d'acheminement retour défini par les trains de rouleaux motorisés inférieur 40 des modules juxtaposés.

## Revendications

1. Installation de contrôle de sûreté de passagers (10) destinée à être installée entre une aire de réception et une aire de sûreté d'une aérogare, les passagers étant munis d'effets personnels à contrôler, ladite installation comprenant un jeu de bacs de transfert et un chemin d'acheminement et de contrôle (14) des bacs de transfert (12), ledit chemin d'acheminement et de contrôle (14) présentant une extrémité de réception (16) située dans ladite aire de réception pour permettre à chacun desdits passagers de charger au moins un bac de transfert (12) contenant ses effets personnels à contrôler, et une extrémité de sûreté (18) située dans ladite aire de sûreté pour permettre à chacun desdits passagers de récupérer ses effets personnels contrôlés et de libérer lesdits au moins un bac de transfert (12), ladite installation comprenant en outre, un chemin d'acheminement retour des bacs pour pouvoir acheminer les bacs de transfert libérés, de ladite extrémité de sûreté (18) vers ladite extrémité de réception (16) et comprenant une pluralité de modules juxtaposés (22) ;
**caractérisée** en ce le chemin d'acheminement retour s'étend sous ledit chemin d'acheminement et de contrôle (14) et en ce que chacun desdits modules (22) comporte, d'une part un berceau en U (24) définissant un plan moyen (Pm) de berceau, orienté sensiblement perpendiculairement à la direction d'entraînement longitudinale des bacs de transfert, de l'aire de réception vers l'aire de sûreté, et d'autre part un train de rouleaux motorisés supérieur (36) installé au-dessus d'un train de rouleaux motorisés inférieur (40) à l'intérieur dudit berceau en U (24) selon une direction sensiblement perpendiculaire audit plan moyen de berceau.

2. Installation de contrôle de sûreté selon la revendication 1, dans laquelle lesdits modules (22) de ladite pluralité de modules présentent des dimensions identiques.

3. Installation de contrôle de sûreté selon la revendication 1 ou 2, dans laquelle les trains de rouleaux motorisés (36, 40) présentent chacun un rouleau moteur et des rouleaux menés couplés en rotation audit rouleau moteur.

4. Installation de contrôle de sûreté selon l'une quelconque des revendications 1 à 3, dans laquelle les trains de rouleaux motorisés (36, 40) présentent chacun une paire d'organes support parallèles (42, 44 ; 46, 48), et en ce que lesdits rouleaux motorisés sont montés transversalement entre les organes support de ladite paire d'organes support.

5. Installation de contrôle de sûreté selon l'une quelconque des revendications 1 à 4, dans laquelle ledit berceau en U (24) présente deux branches opposées (28, 30) et une embase (26) pour maintenir lesdites branches (28, 30) sensiblement verticalement.

6. Installation de contrôle de sûreté selon l'une quelconque des revendications 1 à 5, dans laquelle ledit train de rouleaux motorisés supérieur (36) présente des rouleaux motorisés espacés les uns des autres, et en ce que ledit train de rouleaux motorisés supérieur (36) de l'un desdits modules comprend des organes d'entraînement transversal (68) montés entre lesdits rouleaux motorisés.

7. Installation de contrôle de sûreté selon la revendication 6, dans laquelle lesdits organes d'entraînement transversal (68) comprennent chacun un cadre (82) monté mobile en translation entre une position rétractée et une position en saillie desdits rouleaux motorisés, et une courroie de transfert (86) montée mobile en rotation autour dudit cadre (82).

8. Installation de contrôle de sûreté selon l'une quelconque des revendications 1 à 7 comprenant en outre un module terminal (90), comprenant d'une part un berceau en U (24), et d'autre part un espace de stockage supérieur pour recevoir lesdits bacs de transfert libérés (12), situé au-dessus d'un train de rouleaux motorisés inférieur (102) à l'intérieur dudit berceau en U (24), et en ce que ledit module terminal (90) comprend des roues dentées (94, 96) pour pouvoir entraîner un à un lesdits bacs de transfert libérés (12) sur ledit train de rouleaux motorisés inférieur (102).

9. Installation de contrôle de sûreté selon l'une quelconque des revendications 1 à 8, dans laquelle lesdits modules (22) sont reliés ensemble par un bus informatique.

## Patentansprüche

1. Passagiersicherheitskontrollanlage (10), die dazu bestimmt ist, zwischen einer Empfangszone und einer Sicherheitszone eines Terminals angebracht zu werden, wobei die Passagiere mit zu kontrollierenden persönlichen Gegenständen versehen sind, wobei die Anlage einen Satz an Überstellungsbehältern und einen Transport- und Kontrollweg (14) der Überstellungsbehälter (12) umfasst, wobei der Transport- und Kontrollweg (14) ein Empfangsende (16) aufweist, das sich in der Empfangszone befindet, um es jedem der Passagiere zu ermöglichen, mindestens einen Überstellungsbehälter (12) zu beladen, der seine zu kontrollierenden persönlichen Gegenstände enthält, und ein Sicherheitsende (18), das sich in der Sicherheitszone befindet, um es jedem der Passagiere zu ermöglichen, seine kontrollierten persönlichen Gegenstände in Empfang zu nehmen, und den mindestens einen Überstellungsbehälter (12) freizugeben, wobei die Anlage weiter einen Rücktransportweg der Behälter umfasst, um die freigegebenen Transportbehälter von dem Sicherheitsende (18) zum Empfangsende (16) transportieren zu können, und eine Vielzahl von nebeneinandergestellten Modulen (22) umfassend;
**dadurch gekennzeichnet, dass** sich der Rücktransportweg unter dem Transport- und Kontrollweg (14) erstreckt, und dadurch, dass jedes der Module (22) einerseits ein U-Traggestell (24), das eine Traggestell-Mittelebene (Pm) definiert, die im Wesentlichen senkrecht zur Längsantriebsrichtung der Transportbehälter von der Empfangszone zur Sicherheitszone ausgerichtet ist, und andererseits einen oberen Strang an motorisierten Rollen (36) beinhaltet, der oberhalb eines unteren Strangs an motorisierten Rollen (40) im Inneren des U-Traggestells (24) in einer im Wesentlichen senkrechten Richtung zur Traggestell-Mittelebene angeordnet ist.

2. Sicherheitskontrollanlage nach Anspruch 1, bei dem die Module (22) der Vielzahl von Modulen identische Abmessungen aufweisen.

3. Sicherheitskontrollanlage nach Anspruch 1 oder 2, bei dem die motorisierten Rollenstränge (36, 40) jeweils eine Motorrolle und geführte Rollen aufweisen, die drehend mit der Motorrolle gekoppelt sind.

4. Sicherheitskontrollanlage nach einem der Ansprüche 1 bis 3, bei dem die motorisierten Rollenstränge (36, 40) jeweils ein Paar an parallelen Trägerorganen (42, 44; 46, 48) aufweisen, und dadurch, dass die motorisierten Rollen querlaufend zwischen den Trägerorganen des Paares an Trägerorganen angebracht sind.

5. Sicherheitskontrollanlage nach einem der Ansprüche 1 bis 4, bei dem die U-Traggestell (24) zwei entgegengesetzte Schenkel (28, 30) und einen Sockel (26) aufweist, um die Schenkel (28, 30) im Wesentlichen vertikal zu halten.

6. Sicherheitskontrollanlage nach einem der Ansprüche 1 bis 5, bei dem die obere Strang an motorisierten Rollen (36) motorisierte Rollen aufweist, die voneinander beabstandet sind, und dadurch, dass der obere Strang an motorisierten Rollen (36) des einen der Module Querantriebsorgane (68) umfasst, die zwischen den motorisierten Rollen angebracht sind.

7. Sicherheitskontrollanlage nach Anspruch 6, bei dem die Querantriebsorgane (68) jeweils einen Rahmen (82) umfassen, der vorschubbeweglich zwischen einer eingezogenen Position und einer hervorstehenden Position der motorisierten Rollen angebracht ist, und einen Antriebsriemen (86), der drehbeweglich um den Rahmen (82) herum angebracht ist.

8. Sicherheitskontrollanlage nach einem der Ansprüche 1 bis 7, bei dem sie weiter ein Abschlussmodul (90) umfasst, das einen Teil eines U-Traggestells (24) umfasst, und andererseits einen oberen Ablageraum zum Aufnehmen der freigegebenen Transportbehälter (12), der sich oberhalb eines unteren Strangs an motorisierten Rollen (102) im Inneren des U-Traggestells (24) befindet, und dadurch, dass das Abschlussmodul (90) Zahnräder (94, 96) umfasst, um einen der freigegebenen Transportbehälter (12) auf dem unteren Strang motorisierter Rollen (102) antreiben zu können.

9. Sicherheitskontrollanlage nach einem der Ansprüche 1 bis 8, bei dem die Module (22) durch einen Datenverarbeitungsbus miteinander verbunden sind.

## Claims

1. A passenger security control installation (10) intended to be installed between a receiving area and a security area of an airport terminal, the passengers being provided with personal effects to be checked, said installation comprising a set of transfer trays and a routing and control path (14) of the transfer trays (12), said routing and control path (14) having a receiving end (16) located in said receiving area to allow each of said passengers to load at least one transfer tray (12) containing his personal effects to be checked, and a security end (18) located in said security area to allow each of said passengers to retrieve his controlled personal effects and to release said at least one transfer tray (12), said installation further comprising a return routing path of the trays to be able to route the released transfer trays, from said security end (18) to said receiving end (16), and comprising a plurality of juxtaposed modules (22); **characterised in that** the return routing path extends below said routing and control path (14), and **in that** each of said modules (22) includes, on the one hand, a U-shaped cradle (24) defining a cradle mid-plane (Pm), oriented substantially perpendicular to the longitudinal drive direction of the transfer trays, from the receiving area to the security area, and on the other hand, an upper motorised roller table (36) installed above a lower motorised roller table (40) inside said U-shaped cradle (24) in a direction substantially perpendicular to said cradle mid-plane.

2. The security control installation according to claim 1, wherein said modules (22) of said plurality of modules have identical dimensions.

3. The security control installation according to claim 1 or 2, wherein the motorised roller tables (36, 40) each have a drive roller and driven rollers which are coupled in rotation to said drive roller.

4. The security control installation according to any one of claims 1 to 3, wherein the motorised roller tables (36, 40) each have a pair of parallel support members (42, 44; 46, 48), and in that said motorised rollers are mounted transversely between the support members of said pair of support members.

5. The security control installation according to any one of claims 1 to 4, wherein said U-shaped cradle (24) has two opposite branches (28, 30) and a base (26) for holding said branches (28, 30) substantially vertically.

6. The security control installation according to any one of claims 1 to 5, wherein said upper motorised roller table (36) has motorised rollers spaced apart from each other, and in that said upper motorised roller table (36) of one of said modules comprises transverse drive members (68) mounted between said motorised rollers.

7. The security control installation according to claim 6, wherein said transverse drive members (68) each comprise a frame (82) mounted movable in translation between a retracted position and a protruding position of said motorised rollers, and a transfer belt (86) mounted movable in rotation around said frame (82).

8. The security control installation according to any one of claims 1 to 7, wherein it further comprises a terminal module (90), comprising, on the one hand, a U-shaped cradle (24), and on the other hand, an upper storage space to receive said released transfer trays (12), located above a lower motorised roller table (102) inside said U-shaped cradle (24), and in that said terminal module (90) comprises toothed wheels (94, 96) to be able to drive said released transfer trays (12) one by one on said lower motorised roller table (102).

9. The security control installation according to any one of claims 1 to 8, wherein said modules (22) are connected together by a computer bus.
